(19) Europäisches Patentamt

European Patent Office

Office européen des brevets

(11) **EP 0 858 931 B1**

(12) **EUROPÄISCHE PATENTSCHRIFT**

(45) Veröffentlichungstag und Bekanntmachung des Hinweises auf die Patenterteilung:
**07.05.2003 Patentblatt 2003/19**

(51) Int Cl.⁷: **B60Q 1/115**

(21) Anmeldenummer: **97119873.4**

(22) Anmeldetag: **13.11.1997**

(54) **Einrichtung zur Regelung der Leuchtweite von Scheinwarfern von Fahrzeugen**

Device for controlling the aiming of vehicle headlights

Dispositif pour commander la portée des phases d'un véhicule

(84) Benannte Vertragsstaaten:
**DE FR GB IT**

(30) Priorität: **06.02.1997 DE 19704466**

(43) Veröffentlichungstag der Anmeldung:
**19.08.1998 Patentblatt 1998/34**

(73) Patentinhaber: **Automotive Lighting Reutlingen GmbH**
**72762 Reutlingen (DE)**

(72) Erfinder:
• **Lopez, Eladio**
**1020 Renens (CH)**
• **Marchal, Dominique**
**1030 Bussigny (CH)**
• **Schweizer, Philippe**
**1027 Lonay (CH)**

(74) Vertreter: **Dreiss, Fuhlendorf, Steimle & Becker**
**Patentanwälte**
**Postfach 10 37 62**
**70032 Stuttgart (DE)**

(56) Entgegenhaltungen:
**EP-A- 0 021 890       EP-A- 0 186 571**
**DE-A- 3 827 149       DE-A- 4 341 409**
**FR-A- 2 707 390       US-A- 4 781 465**

**Beschreibung**

Stand der Technik

Die Erfindung geht aus von einer Einrichtung zur Regelung der Leuchtweite von Scheinwerfern von Fahrzeugen nach der Gattung des Anspruchs 1.

Eine derartige Einrichtung ist aus FR 2707390 bekannt, in der ausdrücklich auf die EP-A-0185671 Bezug genommen ist.

Eine ähnliche Einrichtung ist durch die DE 43 41 409 A1 bekannt. Diese Einrichtung weist den Scheinwerfern zugeordnete Verstelleinrichtungen zur Verstellung der Leuchtweite der Scheinwerfer auf. Die Einrichtung weist außerdem eine Sendeeinrichtung auf, durch die ein Strahlungsbündel ausgesandt wird, das einen Bereich vor dem Fahrzeug bestrahlt. Bei einer Änderung der Neigung des Fahrzeugs ändert sich die Leuchtweite der mit dem Fahrzeug verbundenen Scheinwerfer, was bei zu großer Leuchtweite zu einer Blendung des Gegenverkehrs führt oder bei zu geringer Leuchtweite zu einer nicht mehr ausreichenden Sichtweite des Fahrzeuglenkers führt. Bei einer Änderung der Fahrzeugneigung ändert sich auch der Abstand des bestrahlten Bereichs vom Fahrzeug. Durch eine Sensoreinrichtung der Einrichtung wird vom Bereich rückgestrahlte Strahlung erfaßt und diese wird durch eine Auswerteeinrichtung ausgewertet. Durch die Auswerteeinrichtung wird aus der rückgestrahlten Strahlung die Lage des Bereichs, insbesondere dessen Abstand vom Fahrzeug ermittelt und hierfür ein Signal gebildet, das mit einem bei einer korrekten Einstellung der Leuchtweite vorliegenden Soll-Signal verglichen wird. Bei bestehender Abweichung zwischen dem aktuellen Signal und dem Soll-Signal werden die Verstelleinrichtungen zur Beseitigung der Abweichung angesteuert. Bei dieser Ausführung der Leuchtweiteregelungseinrichtung besteht eine gewisse Ungenauigkeit in der Einstellung der Leuchtweite, da sich der Abstand des bestrahlten Bereichs vom Fahrzeug nicht nur mit der Fahrzeugneigung ändert sondern auch mit der Änderung der Höhe des Fahrzeugs, das heißt dessen Ein- oder Ausfederung am Anbauort der Sendeeinrichtung. Dies kann jedoch von der Auswerteeinrichtung nicht erkannt werden, so daß hier unter Umständen die Leuchtweite nicht korrekt eingestellt wird.

Vorteile der Erfindung

Die erfindungsgemäße Einrichtung zur Regelung der Leuchtweite von Scheinwerfern von Fahrzeugen hat demgegenüber den Vorteil, daß die Leuchtweite mit größerer Genauigkeit eingestellt werden kann, da zwar die jeweilige Entfernung der bestrahlten Bereich neben der Neigungsänderung des Fahrzeugs auch von der Höhenänderung abhängig ist, das ausgewertete Verhältnis dieser Entfernungen jedoch nur noch von der Neigungsänderung abhängig ist.

In den abhängigen Ansprüche sind vorteilhafte Ausgestaltungen und Weiterbildungen der erfindungsgemäßen Einrichtung angegeben. Die Ausbildung gemäß Anspruch 2 ermöglicht es, durch einfache Triangulationsverfahren die Entfernungen der Bereiche zu ermitteln. Bei der Ausführung gemäß Anspruch 3 können die Leuchtweiten der Scheinwerfer unabhängig voneinander eingestellt werden und deren Grundeinstellungen brauchen nicht übereinzustimmen.

Zeichnung

Zwei Ausführungsbeispiele der Erfindung sind in der Zeichnung dargestellt und in der nachfolgenden Beschreibung näher erläutert. Es zeigen Figur 1 in vereinfachter Darstellung ein Fahrzeug mit Scheinwerfern und einer Einrichtung zur Regelung der Leuchtweite der Scheinwerfer, Figur 2 das Fahrzeug in einem vertikalen Längsschnitt, Figur 3 ein vereinfachtes Schaltbild der Einrichtung zur Regelung der Leuchtweite, Figur 4 das Fahrzeug mit der Leuchtweiteregelungseinrichtung gemäß einem ersten Ausführungsbeispiel, Figur 5 ein vereinfachtes Schaltbild der Leuchtweiteregelungseinrichtung gemäß einem zweiten Ausführungsbeispiel und Figur 6 ein vereinfachtes Schaltbildund der Leuchtweiteregelungseinrichtung gemäß einem dritten Ausführungsbeispiel.

Beschreibung der Ausführungsbeispiele

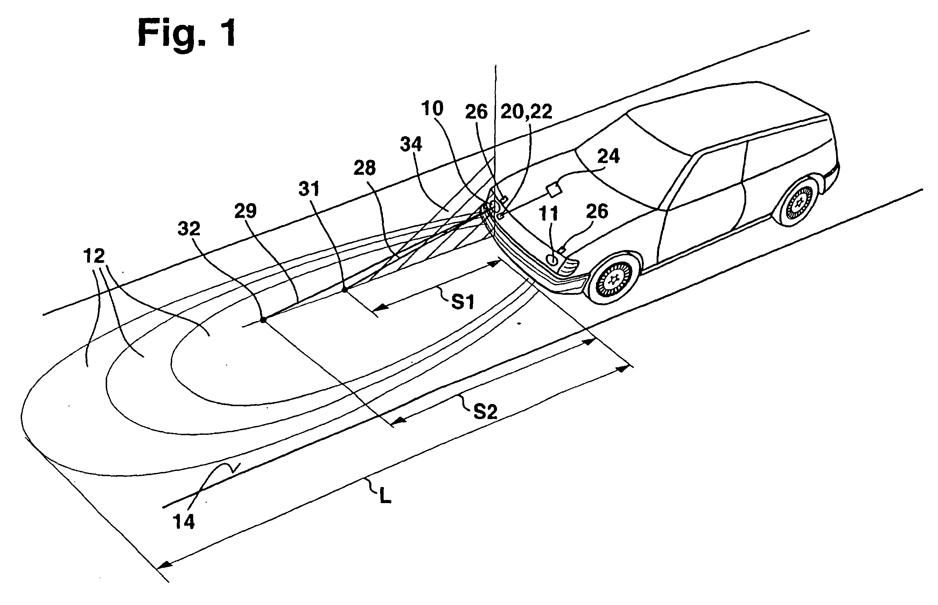

Ein in Figur 1 dargestelltes Fahrzeug, insbesondere ein Kraftfahrzeug, weist in bekannter Weise an seinem Frontende zwei nahe den Seiten des Fahrzeugs angeordnete Scheinwerfer 10,11 auf. Es kann vorgesehen sein, daß die Scheinwerfer 10,11 nur zur Erzeugung des Abblendlichts dienen oder alternativ zur wahlweisen Erzeugung des Abblendlichts und des Fernlichts. Gegebenenfalls können die Scheinwerfer 10,11 auch noch zur Erzeugung anderer Lichtbündel dienen, beispielsweise eines Nebellichts. In der Betriebsstellung für Abblendlicht werden von den Scheinwerfern 10,11 Lichtbündel 12 ausgesandt, durch die die vor dem Fahrzeug liegende Umgebung, unter anderem die Fahrbahn 14, beleuchtet werden. Die Lichtbündel 12 sind in Figur 1 anhand mehrerer Linien gleicher Beleuchtungsstärke angedeutet. Zur Verhinderung einer Blendung des Gegenverkehrs weisen die Lichtbündel 12 eine obere Helldunkelgrenze auf, was bewirkt, daß die Fahrbahn 14 nur bis zu einer bestimmten Entfernung L vor dem Fahrzeug beleuchtet wird. Die Reichweite L stellt dabei die Leuchtweite der Scheinwerfer 10,11 dar. Bei durch eine wechselnde Beladung des Fahrzeugs oder bei während der Fahrt des Fahrzeugs beispielsweise infolge von Bremsund/oder Beschleunigungsvorgängen oder Fahrbahnunebenheiten auftretenden Neigungsänderungen des Fahrzeugs wird die Leuchtweite der Scheinwerfer 10,11, die mit dem Fahrzeug verbunden sind, und die Lage der Helldunkelgrenze verändert. Dabei wird entweder das Vorfeld der Fahrbahn 14 nicht mehr ausreichend beleuchtet, wenn die Leuchtweite geringer wird, oder es tritt eine Blendung des Gegenverkehrs auf, wenn die Leuchtweite größer wird. Erfindungsgemäß ist eine Einrichtung zur Regelung der Leuchtweite vorgesehen, durch die unabhängig von Neigungsänderungen des Fahrzeugs die Leuchtweite konstant gehalten werden kann.

Die Einrichtung zur Regelung der Leuchtweite, nachfolgend kurz Leuchtweiteregelungseinrichtung genannt, kann mit dem Betrieb der Scheinwerfer 10,11 aktiviert werden oder alternativ ständig während des Betriebs des Fahrzeugs aktiviert sein. Die Leuchtweiteregelungseinrichtung weist eine Sendeeinrichtung 20, eine Sensoreinrichtung 22, eine Auswerteeinrichtung 24 und den Scheinwerfern 10,11 zugeordnete Verstelleinrichtungen 26 auf, durch die die Leuchtweite der Scheinwerfer 10,11 verstellt werden kann.

Die Sendeeinrichtung 20 kann beliebig am Frontende des Fahrzeugs angeordnet sein, beispielsweise im Bereich eines Scheinwerfers 10,11. Vorzugsweise ist die Sendeeinrichtung 20 in einen Scheinwerfer 10,11 integriert, wobei die Sendeeinrichtung 20 bei einer durch die Verstelleinrichtung 26 bewirkten Verstellung der Leuchtweite des Scheinwerfers mitverstellt wird. Durch die Sendeeinrichtung 20 werden wenigstens zwei Strahlungsbündel 28,29 ausgesandt, die auf die Fahrbahn 14 vor dem Fahrzeug gerichtet sind und möglichst konzentriert sind, so daß von diesen nur kleine Bereiche in Form von Spots 31,32 der Fahrbahn 14 bestrahlt werden. Die beiden von den Strahlungsbündeln 28,29 bestrahlten Bereiche 31,32 weisen unterschiedliche Abstände vom Fahrzeug auf, wobei der Spot 31 einen Abstand s1 und der Spot 32 einen Abstand s2 aufweist. Die beiden Strahlungsbündel 28,29 gehen vorzugsweise zumindest annähernd von demselben Ursprung aus und verlaufen in einer gemeinsamen Vertikalebene 34, so daß die Bereiche 31,32 in der Vertikalebene 34 die unterschiedlichen Abstände s1,s2 aufweisen, jedoch beide in der Vertikalebene 34 liegen.

Durch die Fahrbahn 14 wird in den Spots 31,32 ein Teil der dort auftreffenden Strahlung reflektiert und zurückgestrahlt. Durch die Sensoreinrichtung 22 wird von den Spots 31,32 zurückgestrahlte Strahlung erfaßt und es werden Signale für die Entfernung d1 und d2 der Spots 31,32 von der Sendeeinrichtung 20 bzw. der Sensoreinrichtung 22 gebildet. Die Sensoreinrichtung 22 kann beliebig am Fahrzeug angeordnet sein, wobei die Anordnung derart ist, daß von den Spots 31,32 rückgestrahlte Strahlung durch die Sensoreinrichtung 22 erfaßt werden kann. Die Sensoreinrichtung 22 kann dabei insbesondere im Bereich eines der Scheinwerfer 10,11 angeordnet sein und vorzugsweise in einen der Scheinwerfer 10,11 integriert sein, wobei eine Integration in denselben Scheinwerfer wie die Sendeeinrichtung 20 oder in den anderen Scheinwerfer vorgesehen sein kann. Die in der Sensoreinrichtung 22 erzeugten Signale werden der Auswerteeinrichtung 24 zugeführt und in dieser verarbeitet.

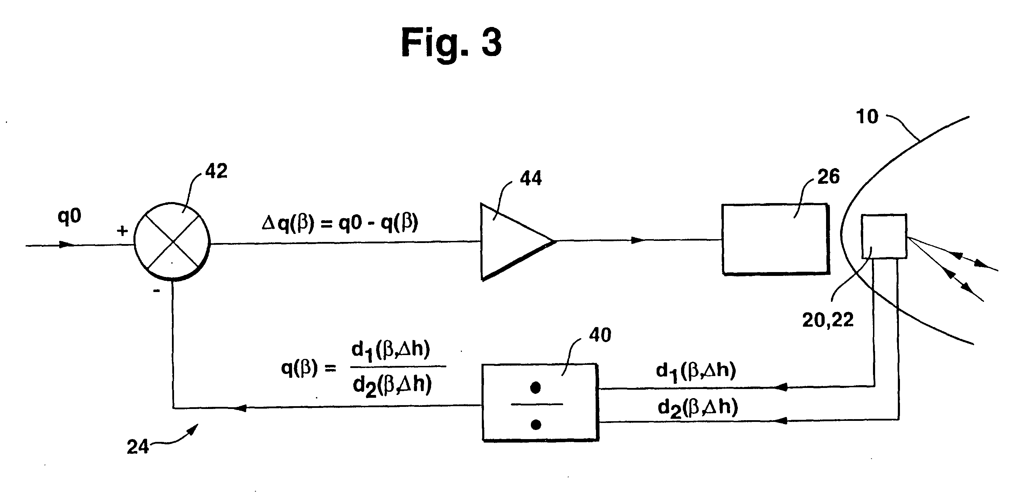

Gemäß Figur 3 weist die Auswerteeinrichtung 24 eine Einheit 40 auf, in der ein Signal für das Verhältnis $q(\beta)$ der Entfernung d1 zur Entfernung d2 gebildet wird. Das Signal für das Verhältnis $q(\beta)$ wird einem Komparator 42 zugeführt, durch den das aktuelle Signal für das Verhältnis $q(\beta)$ mit einem vorgegebenen Soll-Signal für ein Soll-Verhältnis q0 verglichen wird. Das Soll-Signal für das Soll-Verhältnis q0 ergibt sich bei korrekter Einstellung der Leuchtweite, bei der sich die Spots 31,32 in bestimmten Entfernungen vom Fahrzeug befinden. Durch den Komparator 42 wird ein Signal für die Differenz $\Delta q(\beta) = q0 - q(\beta)$ des Soll-Signals für das Soll-Verhätnis q0 und des aktuellen Signals des Verhältnisses $q(\beta)$ gebildet und dieses einer Steuereinrichtung 44 zugeführt. Sofern die Differenz $\Delta q(\beta)$ nicht Null ist, werden durch die Steuereinrichtung 44 die Verstelleinrichtungen 26 der Scheinwerfer 10,11 angesteuert, so daß die Differenz $\Delta q(\beta)$ auf Null gebracht wird.

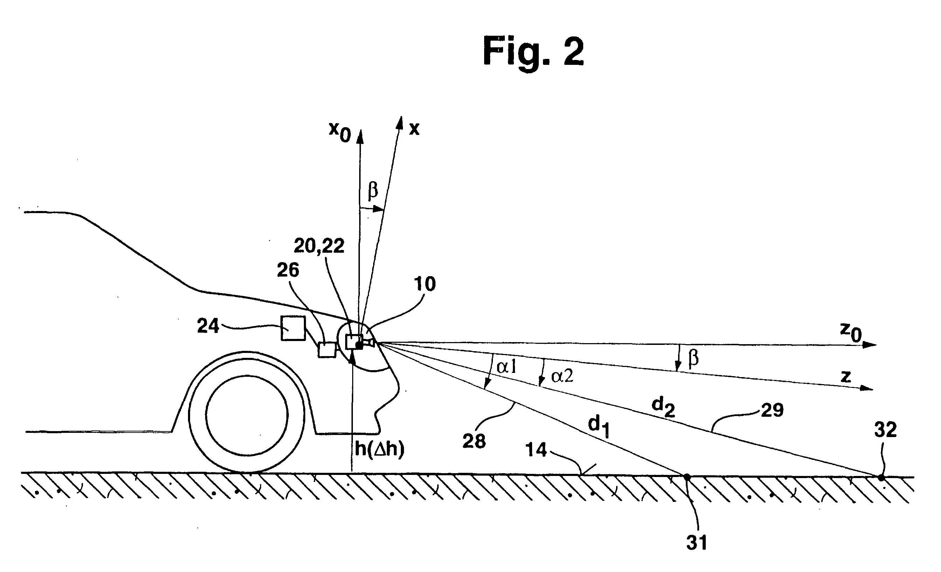

Anhand von Figur 2 wird nachfolgend die Abhängigkeit der Entfernungen d1 und d2 der Spots 31 und 32 vom Fahrzeug von einer Neigungsänderung des Fahrzeugs verdeutlicht. In Figur 2 ist ein erstes kartesisches Koordinatensystem mit einer horizontalen Achse Z0 und einer vertikalen Achse X0 dargestellt, das bezüglich der Fahrbahn 14 feststehend ist. Ein zweites kartesisches Koordinatensystem weist eine horizontale Achse Z und eine vertikale Achse X auf, wobei dieses Koordinatensystem bezüglich dem Fahrzeug feststehend ist und dessen Lage sich mit der Lage des Fahrzeugs ändert. Abhängig von der aktuellen Lage weist das Fahrzeug eine Neigung auf, die durch den Winkel $\beta$ zwischen den Achsen Z0 und Z sowie zwischen den Achsen X0 und X verdeutlicht ist. Die von der Sendeeinrichtung 20 ausgesandten Strahlungsbündel 28,29 verlaufen zur Achse Z geneigt, wobei das Strahlungsbündel 28 unter einem Winkel $\alpha 1$ zur Achse Z geneigt verläuft und das Strahlungsbündel 29 unter einem Winkel $\alpha 2$ zur Achse Z geneigt verläuft. Der Spot 31 ist in einer Entfernung d1 von der Sendeeinrichtung 20 und der mit dieser im Scheinwerfer 10 integrierten Sensoreinrichtung 22 entfernt angeordnet und der Spot 32 ist in einer Entfernung d2 angeordnet. Bei einer Änderung der Beladung des Fahrzeugs oder bei während der Fahrt auftretenden Brems- oder Beschleunigungsvorgängen sowie beim Überfahren von Fahrbahnunebenheiten tritt eine Änderung des Neigungswinkels $\beta$ des Fahrzeugs auf, mit der sich auch die Entfernungen d1 und d2 der Spots 31,32 ändern. Bei diesen Vorgängen tritt jedoch auch

eine Änderung $\Delta$h der Höhe h des Anbauorts der Sendeeinrichtung 20 sowie der Sensoreinrichtung 22 am Fahrzeug relativ zur Fahrbahn 14 auf, die ebenfalls zu einer Änderung der Entfernungen d1 und d2 der Spots 31 und 32 führt.

Nachfolgend werden Gleichungen für die Abhängigkeit der Winkel $\alpha$1 und $\alpha$2 vom Neigungswinkel $\beta$ sowie von der Änderung $\Delta$h der Höhe h angegeben, wie sie sich bei der Bestimmung der Seiten und Winkel rechtwinkliger Dreiecke ergeben:

$$\sin(\alpha1+\beta) = h(\Delta h) \: / \: d1(\Delta h, \beta) \tag{1}$$

$$\sin(\alpha2+\beta) = h(\Delta h) \: / \: d2(\Delta h, \beta) \tag{2}$$

Aus diesen Gleichungen ergeben sich die Entfernungen d1 und d2 gemäß folgenden Gleichungen:

$$d1(\Delta h, \beta) = h(\Delta h) \: / \: \sin(\alpha1+\beta) \tag{3}$$

$$d2(\Delta h, \beta) = h(\Delta h) \: / \: \sin(\alpha2+\beta) \tag{4}$$

Es ist dabei ersichtlich, daß die Entfernungen d1 und d2 neben dem Neigungswinkel auch von der Höhenänderung h($\Delta$h) abhängen. Wird jedoch gemäß folgender Gleichungen das Verhältnis der Entfernungen d1 und d2 gebildet:

$$q(\beta) = d1(\Delta h, \beta) \: / \: d2(\Delta h, \beta) = \sin(\alpha2+\beta) \: / \: \sin(\alpha1+\beta) \tag{5}$$

so ist ersichtlich, daß dieses Verhältnis q($\beta$) nur noch vom Neigungswinkel $\beta$ abhängig ist. Für kleine Neigungswinkel $\beta$ können die folgenden Vereinfachungen für die Gleichung (5) getroffen werden:

$$\sin(\alpha1+\beta) = \sin(\alpha1) + \beta \cos(\alpha1) \tag{6}$$

$$\sin(\alpha2+\beta) = \sin(\alpha2) + \beta \cos(\alpha2) \tag{7}$$

Die Gleichungen (6) und (7) in die Gleichung (5) eingesetzt führen zu folgender Gleichung:

$$q(\beta) = [\sin(\alpha2) + \beta \cos(\alpha2)] \: / \: [\sin(\alpha1) + \beta \cos(\alpha1)] \tag{8}$$

Gemäß den vorstehenden Gleichungen (1) bis (8) kann durch die Auswerteeinrichtung das Verhältnis q($\beta$) ermittelt werden und mit dem Soll-Verhältnis q0 verglichen werden und die Differenz $\Delta$q($\beta$) gebildet werden.

Es kann vorgesehen sein, daß nur eine Sendeeinrichtung 20 und eine Sensoreinrichtung 22 mit zugehöriger Auswerteeinrichtung 24 vorgesehen sind, die beispielsweise in einem Scheinwerfer 10 integriert sein können. Die Auswerteeinrichtung 24 ist dabei auch mit der Verstelleinrichtung 26 des anderen Scheinwerfers 11 verbunden, so daß bei diesem entsprechend die Leuchtweite eingestellt wird. Es wird dabei davon ausgegangen, daß beide Scheinwerfer 10,11 zunächst dieselbe Grundeinstellung der Leuchtweite aufweisen, ausgehend von der eine Einstellung der Leuchtweite erfolgt. Alternativ kann auch vorgesehen sein, daß in beiden Scheinwerfern 10,11 jeweils eine Sendeeinrichtung 20 und eine Sensoreinrichtung 22 mit zugehöriger Auswerteeinrichtung 24 vorgesehen ist. In diesem Fall brauchen die Grundeinstellungen der Leuchtweiten der beiden Scheinwerfer 10,11 nicht übereinzustimmen.

Aus den vorstehend angegebenen Gleichungen (1) und (2) kann auch die Höhe h des Anbauorts über der Fahrbahn ermittelt werden. Wenn zwei Sendeeinrichtungen 20 und zwei Sensoreinrichtungen 22 mit zugehörigen Auswerteeinrichtungen 24 vorgesehen sind, so kann für zwei verschiedene Punkte des Fahrzeugs deren Höhe h über der Fahrbahn ermittelt werden. Hieraus kann wiederum der Wankwinkel des Fahrzeugs, das ist dessen Verdrehung um eine horizontale Achse, ermittelt werden. Die Informationen über die Neigung des Fahrzeugs, dessen Höhe über der Fahrbahn sowie dessen Wankwinkel können für andere Systeme des Fahrzeugs verwendet werden, beispielsweise für eine Niveauregulierung oder eine aktive Fahrwerksregelung.

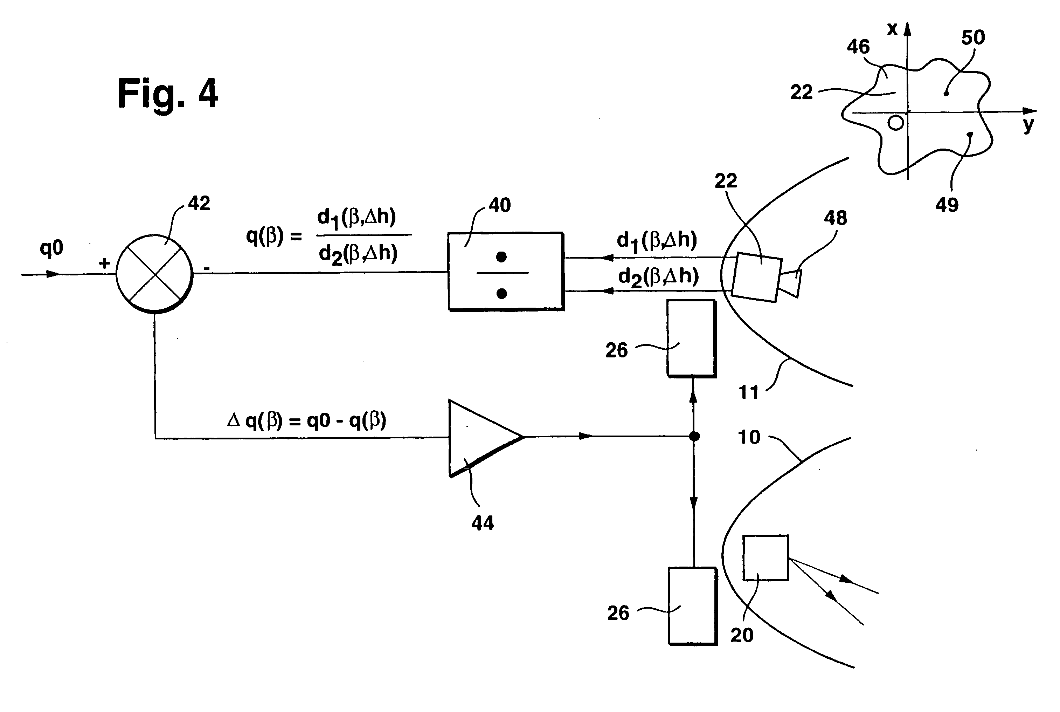

Die Sendeeinrichtung 20 der vorstehend beschriebenen Leuchtweiteregelungseinrichtung kann beispielsweise bei einem ersten Ausführungsbeispiel wie in Figur 4 dargestellt elektromagnetische Strahlungsbündel 28,29 aussenden, wobei dies Licht im sichtbaren oder nichtsichtbaren Wellenlängenbereich sein können. Die Sensoreinrichtung 22 ist dabei entsprechend als optoelektronische Sensoreinrichtung ausgebildet und weist eines oder mehrere für die von der Sendeeinrichtung 20 ausgesandte Strahlung empfindliche Elemente 46 auf. Die Sensoreinrichtung 22 ist am Fahrzeug mit Abstand zur Sendeeinrichtung 20 angeordnet, so daß die optischen Achsen der Sendeeinrichtung 20 und der Sensoreinrichtung 22 voneinander abweichen. Beispielsweise kann die Sendeeinrichtung 20 im einen Scheinwerfer 10 und die Sensoreinrichtung 22 im anderen Scheinwerfer 11 integriert sein. Die Elemente 46 der Sensoreinrichtung 22 können alternativ als Fotodioden, Fotozellen oder als CCD-Zellen (Charge-coupled-Device) ausgeführt sein, die linear oder matrixartig angeordnet sind. Die Sensoreinrichtung 22 weist außerdem eine Abbildungsoptik 48 auf, durch die einfallende Strahlung auf die Elemente 46 gerichtet wird, wobei die Strahlung abhängig von ihrer Einfallsrichtung auf unterschiedliche Elemente 46 trifft. Alternativ kann die Sensoreinrichtung 22 auch als Positionssensor, beispielsweise in Form eines PSD (Position Sensing Device) ausgeführt sein.

Beim dargestellten Ausführungsbeispiel weist die Sensoreinrichtung 22 eine Vielzahl von matrixartig verteilt angeordneten Elementen 46 auf. Die Spots 31,32 werden bei dieser Ausführung als Bildpunkte 49,50 auf einzelne Elemente 46 in der Sensoreinrichtung 22 abgebildet. Die Lagen der die Spots 31,32 repräsentierenden Bildpunkte 49,50 in der Sensoreinrichtung 22 sind dabei ein Maß für die Entfernungen d1 und d2 der Spots 31,32. In der Auswerteeinrichtung 24 wird dann wie vorstehend erläutert ein Signal für das Verhältnis $q(\beta)$ der für die Entfernungen d1 und d2 gebildeten Signale gebildet und dieses wird mit dem vorgegebenen Soll-Signal verglichen und bei bestehender Abweichung werden die Verstelleinrichtungen 26 angesteuert.

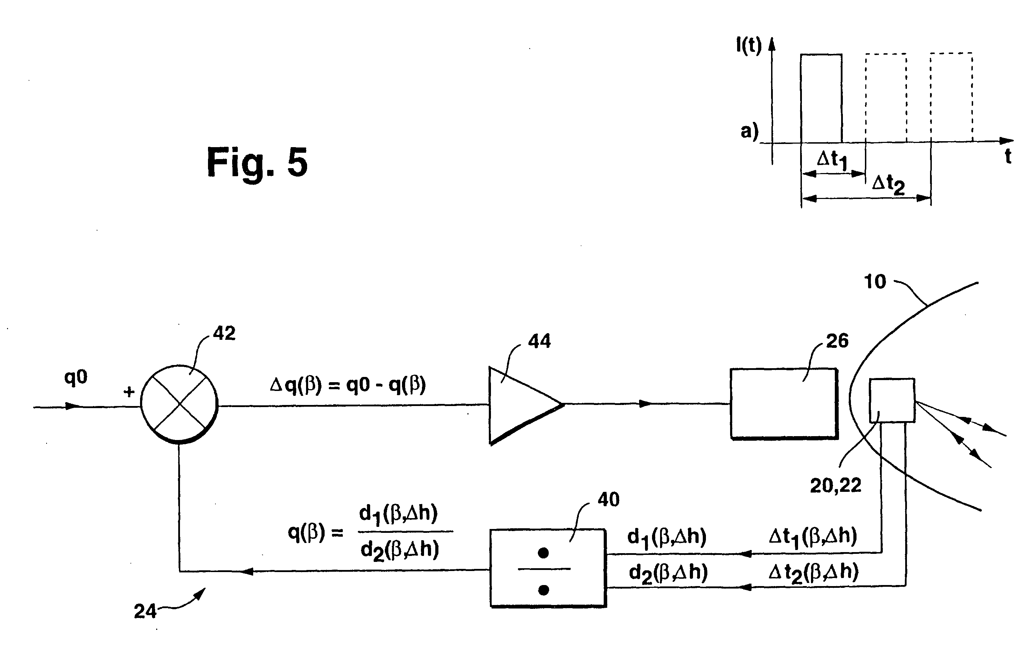

Alternativ zur vorstehend erläuterten Ausführung der Sensoreinrichtung 22, bei der die Lage der die Spots 31,32 repräsentierenden Bildpunkte 49,50 in der Sensoreinrichtung 22 ausgewertet wird, kann auch bei einem zweiten, in Figur 5 dargestellten Ausführungsbeispiel vorgesehen werden, daß die Zeitdauern $\Delta t1$ und $\Delta t2$ ausgewertet werden, die zwischen der Aussendung der Strahlungsbündel 28,29 durch die Sendeeinrichtung 20 und dem Empfang der rückgestrahlten Strahlung durch die Sensoreinrichtung 22 vorhanden sind. Im Teil a) der Figur 5 ist dabei mit durchgezogenen Linien der Verlauf der Intensität I(t) der von der Sendeeinrichtung 20 ausgesandten Strahlungsbündel 28,29 und mit gestrichelten Linien der Verlauf der Intensität I(t) der durch die Bereiche 31,32 rückgestrahlten und durch die Sensoreinrichtung 22 empfangenen Strahlung dargestellt. Für durch den Bereich 31 rückgestrahlte Strahlung ergibt sich die Zeitdauer $\Delta t1$ und für die durch den Bereich 32 rückgestrahlte Strahlung ergibt sich die Zeitdauer $\Delta t2$. Unter Berücksichtigung der Ausbreitungsgeschwindigkeit der Strahlungsbündel 28,29 sowie der rückgestrahlten Strahlung können aus diesen Zeitdauern $\Delta t1$ und $\Delta t2$ die Entfernungen d1 und d2 bestimmt werden, die dann wie vorstehend erläutert in der Auswerteeinrichtung 24 weiterverarbeitet werden. Die Strahlungsbündel 28,29 werden dabei durch die Sendeeinrichtung 20 nicht kontinuierlich ausgesandt, sondern gepulst, so daß jeweils für einen Strahlungspuls die vorstehende Auswertung durchgeführt werden kann. Die Sendeeinrichtung 20 kann dabei beispielsweise eine oder mehrere Leuchtdioden, insbesondere Laserdioden, als Strahlungsquellen aufweisen.

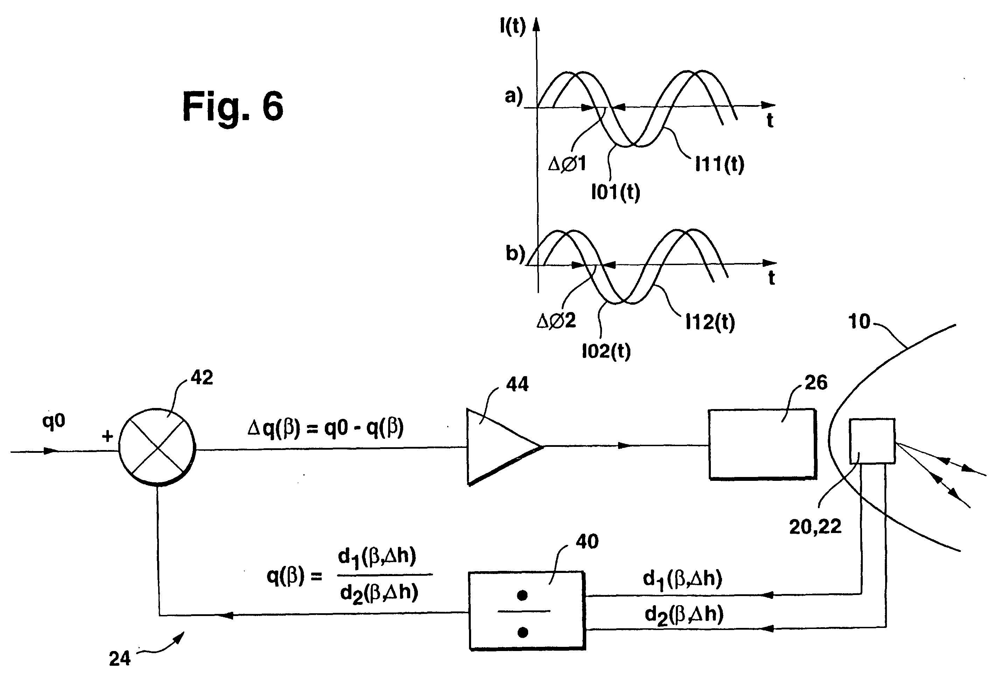

Eine weitere alternative Vorgehensweise zur Ermittlung der Entfernungen d1 und d2 der Spots 31,32 gemäß einem in Figur 6 dargestellten dritten Ausführungsbeispiel besteht darin, daß die Sendeeinrichtung 20 die Strahlungsbündel 28,29 mit einer Phasenmodulation aussendet, wobei die Intensität der Strahlungsbündel 28,29 sich mit einer bestimmten Frequenz ändert. An den Spots 31,32 rückgestrahlte und von der Sensoreinrichtung 22 empfangene Strahlung weist dabei ebenfalls eine Phasenmodulation auf, die jedoch gegenüber der Phasenmodulation der durch die Sendeeinrichtung 20 ausgesandten Strahlungsbündel 28,29 verschoben ist. Die Differenz der Phasenmodulationen der von der Sensoreinrichtung 22 empfangenen Strahlung gegenüber den Phasenmodulationen der ausgesandten Strahlungsbündel 28,29 ist ein Maß für die Zeitdauern zwischen Aussendung und Empfang der Strahlung und somit ein Maß für die Entfernungen d1 und d2 der Spots 31,32. Im Teil a) der Figur 6 ist der Verlauf der Intensität I01(t) des ersten Strahlungsbündels 28 sowie der Verlauf der Intensität I11(t) der durch den Spot 31 rückgestrahlten Strahlung dargestellt. Zwischen diesen ist eine Phasendifferenz $\Delta\phi1$ vorhanden. Im Teil b) der Figur 6 ist der Verlauf der Intensität I02(t) des zweiten Strahlungsbündels 29 sowie der Verlauf der Intensität I12(t) der durch den Spot 32 rückgestrahlten Strahlung dargestellt. Zwischen diesen ist eine Phasendifferenz $\Delta\phi2$ vorhanden. Die Phasendifferenzen $\Delta\phi1$ und $\Delta\phi2$ sind dabei proportional zu den Entfernungen d1 und d2 der Spots 31 und 32, wobei die in der Sensoreinrichtung 22 dabei aus den Differenzen der Phasenmodulationen gewonnenen Signale für die Entfernungen d1 und d2 dann wiederum wie vorstehend erläutert in der Auswerteeinrichtung 24 verarbeitet werden.

Beim vorstehend erläuterten zweiten und dritten Ausführungsbeispiel können die durch die Sendeeinrichtung 20 ausgesandten Strahlungsbündel 28,29 elektromagnetische Strahlung sein, wie beispielsweise Licht im sichtbaren oder nichtsichtbaren Wellenlängenbereich. Alternativ können die Strahlungsbündel 28,29 auch elektromagnetische Strahlung in Form von Mikrowellen sein. Die Verwendung elektromagnetischer Strahlung bietet den Vorteil, daß die Bestimmung der Entfernungen d1 und d2 sehr schnell erfolgen kann, hierfür kann 1ms oder weniger ausreichen, und somit auch die Regelung der Leuchtweite entsprechend schnell erfolgen kann und auch bei kurzzeitigen Änderungen der Fahrzeugneigung die Leuchtweite korrekt eingestellt werden kann. Weiterhin alternativ können die Strahlungsbündel 28,29 auch Schallwellen, insbesondere Ultraschallwellen sein.

**Patentansprüche**

1. Einrichtung zur Regelung der Leuchtweite von Scheinwerfern von Fahrzeugen mit wenigstens einer einem Scheinwerfer (10,11) zugeordneten Verstelleinrichtung (26), mit wenigstens einer Sendeeinrichtung (20), durch die wenigstens ein Strahlungsbündel (28,29) ausgesandt wird, das wenigstens einen Bereich (31,32) vor dem Fahrzeug bestrahlt, mit wenigstens einer Sensoreinrichtung (22), durch die von dem wenigstens einen Bereich (31,32) rückgestrahlte Strahlung erfaßt wird, und mit wenigstens einer Auswerteeinrichtung (24), durch die aus der von der Sensoreinrichtung (22) erfaßten Strahlung die Lage des wenigstens einen Bereichs (31,32) ermittelt wird und mit einer bei korrekter Einstellung der Leuchtweite vorliegenden Soll-Lage verglichen wird, wobei bei bestehender Abweichung zwischen der aktuell ermittelten Lage und der Soll-Lage die wenigstens eine Verstelleinrichtung (26) zur Beseitigung der Abweichung angesteuert wird, **dadurch gekennzeichnet, daß** durch die wenigstens eine Sendeeinrichtung (20) wenigstens zwei Strahlungsbündel (28,29) ausgesandt werden, die wenigstens zwei in unterschiedlichen Entfernungen (d1,d2) angeordnete Bereiche (31,32) bestrahlen, daß durch die Auswerteeinrichtung (24) die Entfernungen (d1,d2) repräsentierende Signale verarbeitet werden und daß durch die Auswerteeinrichtung (24) ein Signal für das Verhältnis (q(d1/d2)) der wenigstens zwei Entfernungen (d1,d2) gebildet wird, das mit dem Soll-Signal verglichen wird, das ein bei korrekter Einstellung der Leuchtweite vorliegendes Sollverhältnis repräsentiert.

2. Einrichtung nach Anspruch 1, **dadurch gekennzeichnet, daß** die wenigstens zwei Strahlungsbündel (28,29) zumindest annähernd von demselben Ursprung ausgehen.

3. Einrichtung nach Anspruch 1 oder 2, **dadurch gekennzeichnet, daß** jedem Scheinwerfer (10,11) des Fahrzeugs jeweils eine Sendeeinrichtung (20), eine Sensoreinrichtung (22), eine Auswerteeinrichtung (24) und eine Verstelleinrichtung (26) zugeordnet ist.

4. Einrichtung nach Anspruch 1 oder 2, **dadurch gekennzeichnet, daß** nur einem Scheinwerfer (10,11) des Fahrzeugs eine Sendeeinrichtung (20), eine Sensoreinrichtung (22) sowie eine Auswerteeinrichtung (24) zugeordnet ist und daß durch die Auswerteeinrichtung die Verstelleinrichtungen (26) sämtlicher Scheinwerfer (10,11) angesteuert werden.

5. Einrichtung nach einem der vorstehenden Ansprüche, **dadurch gekennzeichnet, daß** die wenigstens zwei durch die Sendeeinrichtung (20) ausgesandten Strahlungsbündel (28,29) in einer gemeinsamen Vertikalebene (34) verlaufen.

6. Einrichtung nach einem der vorstehenden Ansprüche, **dadurch gekennzeichnet, daß** die durch die Sendeeinrichtung (20) ausgesandten Strahlungsbündel (28,29) elektromagnetische Strahlung sind, daß die Sensoreinrichtung (22) eine optoelektronische Sensoreinrichtung ist, die wenigstens ein für die ausgesandte Strahlung empfindliches Element (46) aufweist, daß die wenigstens zwei Bereiche (31,32) in der Sensoreinrichtung (22) als Bildpunkte (49,50) abgebildet werden und daß durch die Auswerteeinrichtung (24) die die Entfernungen (d1,d2) der Bereiche (31,32) repräsentierenden Lagen der Bildpunkte (49,50) ausgewertet werden.

7. Einrichtung nach einem der Ansprüche 1 bis 5, **dadurch gekennzeichnet, daß** durch die Sendeeinrichtung (20) die wenigstens zwei Strahlungsbündel (28,29) als Strahlungspulse ausgesandt werden und daß durch die Auswerteeinrichtung (24) die Zeitdauern ($\Delta t1$, $\Delta t2$) ausgewertet werden, die zwischen der Aussendung der Strahlungspulse durch die Sendeeinrichtung (20) und dem Empfang der in den Bereichen (31,32) rückgestrahlten Strahlungspulse durch die Sensoreinrichtung (22) vorliegen.

8. Einrichtung nach einem der Ansprüche 1 bis 5, **dadurch gekennzeichnet, daß** durch die Sendeeinrichtung (20) die wenigstens zwei Strahlungsbündel (28,29) mit einer Phasenmodulation ausgesandt werden und daß durch die Auswerteeinrichtung (24) die Differenzen ($\Delta\phi1$, $\Delta\phi2$) der Phasenmodulationen der durch die Sensoreinrichtung (22) empfangenen Strahlungen gegenüber der Phasenmodulation der durch die Sendeeinrichtung (20) ausgesandten Strahlungen ausgewertet werden.

9. Einrichtung nach einem der Ansprüche 1 bis 5, 7 oder 8, **dadurch gekennzeichnet, daß** die wenigstens zwei durch die Sendeeinrichtung (20) ausgesandten Strahlungsbündel (28,29) elektromagnetische Strahlung sind.

**10.** Einrichtung nach Anspruch 9, **dadurch gekennzeichnet, daß** die wenigstens zwei durch die Sendeeinrichtung (20) ausgesandten Strahlungsbündel (28,29) Mikrowellen sind.

**11.** Einrichtung nach einem der Ansprüche 1 bis 5, 7 oder 8, **dadurch gekennzeichnet, daß** die wenigstens zwei durch die Sendeeinrichtung (20) ausgesandten Strahlungsbündel (28, 29) Schallwellen sind, insbesondere Ultraschallwellen.

**Claims**

**1.** Facility for the regulation of the headlight beam of headlights of vehicles with at least one adjusting device (26) allocated to one headlight (10, 11), with at least one transmission unit (20) through which at least one radiation beam (28, 29) is sent out that radiates at least one area (31, 32) in front of the vehicle, with at least one sensor unit (22) through which the back-reflected beam from the one area at least (31, 32) is detected and, with at least one evaluation unit (24) through which from the beam detected by the sensor unit (22) the location of the at least one area (31, 32) is determined and is compared with a required setpoint position existing with a correct adjustment setting of the headlight beam, where in the event of existing deviation between the currently determined location and the required setpoint position the at least one adjusting device (26) is activated for the elimination of the deviation, **wherein**, that by means of the at least one transmitter unit (20), at least two radiation beams (28, 29) are sent out which radiate at least two areas (31, 32) at different distances (d1, d2), that by means of the evaluation unit (24) the signals representing the distances (d1, d2) are processed and that by means of the evaluation unit (24) a signal is formed for the ratio (q(d1/d2)) of the at least two distances (d1, d2) that is compared with the required setpoint signal that represents an existing required setpoint ratio with a correct adjustment setting of the headlight beam.

**2.** Facility according to Claim 1, **wherein** the at least two radiation beams (28, 29) are emitted at least approximately from the same origin.

**3.** Facility according to Claim 1 or 2, **wherein**, in each case, a transmitter unit (20), a sensor unit (22), an evaluation unit (24) and an adjusting device (26) is allocated to each headlight (10, 11) of the vehicle.

**4.** Facility according to Claim 1 or 2, **wherein** a transmitter unit (20), a sensor unit (22) as well as an evaluation unit is allocated only to one headlight (10, 11) and that, by means of the evaluation unit, the adjusting devices (26) of all headlights (10, 11) are activated.

**5.** Facility according to one of the previous Claims, **wherein** the at least two radiation beams (28, 29) sent out by the transmission unit (20) run in a common vertical plane (34).

**6.** Facility according to one of the previous Claims, **wherein** the radiation beams (28, 29) sent out by the transmission unit (20) are electromagnetic radiation, the sensor unit (22) is an optoelectronic sensor unit which has at least one sensitive element (46) for the beam sent out, the at least two areas (31, 32) are imaged in the sensor unit (22) as pixels (49, 50) and, by means of the evaluation unit (24), the locations of the pixels (49, 50) representing the distances (d1, d2) of the areas (31, 32) are evaluated.

**7.** Facility according to one of the Claims 1 to 5, **wherein**, by means of the transmission unit (20), the at least two radiation beams (28, 29) are sent out as radiation pulses and, by means of the evaluation unit (24), the time durations ($\Delta t1$, $\Delta t2$) are evaluated which exist between the emission of the radiation pulses by the transmission unit (20) and the reception of the radiation pulses back-reflected in the areas (31, 32) through the sensor unit (22).

**8.** Facility according to one of the Claims 1 to 5, **wherein**, by means of the transmission unit (20), the at least two radiation beams (28, 29) are sent out with a phase modulation and, by means of the evaluation unit (24), the differences ($\Delta \Omega 1$, $\Delta \Omega 2$) of the phase modulations of the received radiations by the sensor unit (22) opposite the phase modulation of the emitted radiations by the transmitter unit (20) are evaluated.

**9.** Facility according to one of the Claims 1 to 5, 7 or 8, **wherein** the at least two radiation beams (28, 29) emitted by the transmission unit (20) are electromagnetic radiation.

**10.** Facility according to Claim 9, **wherein** the at least two radiation beams (28, 29) emitted by the transmission unit (20) are microwaves.

11. Facility according to one of the Claims 1 to 5, 7 or 8, **wherein** the at least two radiation beams (28, 29) emitted by the transmission unit (20) are sound waves, in particular ultrasonic sound waves.

**Revendications**

1. Installation pour réguler la portée des projecteurs d'un véhicule comportant au moins une installation de réglage (26) associée à un projecteur (10, 11), au moins une installation d'émission (20) qui émet au moins un faisceau de rayonnement (28, 29) éclairant au moins une zone (31, 32) devant le véhicule, avec
au moins une installation de capteur (22) qui saisit le rayonnement renvoyé par au moins la zone (31, 32) et au moins une installation d'exploitation (24) qui détermine, à partir du rayonnement saisi par l'installation de capteur (22), la position de cette zone (31, 32) et la compare avec une position de consigne qui existe lorsque le réglage de la portée est correct, alors qu'en cas de déviation entre la position déterminée actuellement et la position de consigne, l'installation de réglage (26) est commandée pour éliminer la différence,
**caractérisée en ce qu'**
au moins l'installation d'émission (20) émet au moins deux faisceaux de rayonnement (28, 29) qui éclairent au moins deux zones (31, 32) situées à des distances différentes (d1, d2), l'installation d'exploitation (24) traite les signaux représentant des éloignements (d1, d2), et l'installation d'exploitation (24) compare un signal du rapport (q(d1/d2)) au moins des deux éloignements (d1, d2) avec le signal de consigne représentant le rapport de consigne existant lorsque la portée des feux est réglée correctement.

2. Installation selon la revendication 1,
**caractérisée en ce qu'**
au moins deux faisceaux de rayonnement (28, 29) partent au moins sensiblement de la même origine.

3. Installation selon les revendications 1 ou 2,
**caractérisée en ce qu'**
à chaque projecteur (10, 11) du véhicule on associe chaque fois une installation d'émission (20), une installation de capteur (22), une installation d'exploitation (24) et une installation de réglage (26).

4. Installation selon les revendications 1 ou 2,
**caractérisée en ce que**
seulement un projecteur (10, 11) du véhicule comporte une installation d'émission (20), une installation de capteur (22) et une installation d'exploitation (24), et
l'installation d'exploitation commande les installations de réglage (26) de tous les projecteurs (10, 11).

5. Installation selon l'une des revendications précédentes,
**caractérisée en ce qu'**
au moins les deux faisceaux de rayonnement (28, 29) émis par l'installation d'admission (20) se trouvent dans un même plan vertical (34).

6. Installation selon l'une des revendications précédentes,
**caractérisée en ce que**
les faisceaux de rayonnement (28, 29) émis par l'installation d'émission (20) sont des rayonnements électromagnétiques,
l'installation de capteur (22) est une installation de capteur optoélectronique comportant au moins un élément (46) sensible au rayonnement émis,
on forme deux zones (31, 32) des points images (49, 50) dans l'installation de capteur (22) et l'installation d'exploitation (24) exploite les positions des points images (49, 50) représentant les éloignements (d1, d2) des zones (31, 32).

7. Installation selon l'une des revendications 1 à 5,
**caractérisée en ce que**
l'installation d'émission (20) émet au moins deux faisceaux de rayonnement (28, 29) sous la forme d'impulsion de rayonnement et
l'installation d'exploitation (24) exploite les durées ($\Delta$t1, $\Delta$t2) comprises entre l'émission des impulsions de rayonnement par l'installation démission (20) et la réception par l'installation de capteur (22) des impulsions de rayonnement renvoyées dans les zones (31, 32).

8. Installation selon l'une des revendications 1 à 5,
   **caractérisée en ce que**
   l'installation d'émission (20) émet au moins deux faisceaux de rayonnement (28, 29) avec une modulation de phase et l'installation d'exploitation (24) exploite les différences ($\Delta\varphi 1$, $\Delta\varphi 2$) des modulations de phase des rayonnements reçus par l'installation de capteur (22) par rapport à la modulation de phase du rayonnement émis par l'installation d'émission (20).

9. Installation selon l'une des revendications 1 à 5 et 7 ou 8,
   **caractérisée en ce qu'**
   au moins deux faisceaux de rayonnement (28, 29) émis par l'installation d'émission (20) sont des rayonnements électromagnétiques.

10. Installation selon la revendication 9,
    **caractérisée en ce qu'**
    au moins deux faisceaux de rayonnement (28, 29) émis par l'installation d'émission (20) sont des hyperfréquences.

11. Installation selon l'une des revendications 1 à 5, 7 ou 8,
    **caractérisée en ce qu'**
    au moins deux des faisceaux de rayonnement (28, 29) émis par l'installation d'émission (20) sont des ondes sonores, notamment des ultrasons.

Fig. 1

# Fig. 2

EP 0 858 931 B1

# Fig. 3

$q0$

$+$

42

$\triangle q(\beta) = q0 - q(\beta)$

44

26

10

20,22

$-$

24

$q(\beta) = \dfrac{d_1(\beta, \triangle h)}{d_2(\beta, \triangle h)}$

40

$d_1(\beta, \triangle h)$

$d_2(\beta, \triangle h)$

EP 0 858 931 B1

Fig. 4

$$q(\beta) = \frac{d_1(\beta, \Delta h)}{d_2(\beta, \Delta h)}$$

$$\Delta q(\beta) = q0 - q(\beta)$$

EP 0 858 931 B1

# Fig. 5

a)

$I(t)$

$\Delta t_1$   $\Delta t_2$   $t$

10

26

20,22

$\Delta t_1(\beta,\Delta h)$
$\Delta t_2(\beta,\Delta h)$

$d_1(\beta,\Delta h)$
$d_2(\beta,\Delta h)$

40

44

$\Delta q(\beta) = q0 - q(\beta)$

$q(\beta) = \dfrac{d_1(\beta,\Delta h)}{d_2(\beta,\Delta h)}$

42

24

q0

+

14

# Fig. 6

a) $\Delta\varnothing 1$    $I01(t)$    $I11(t)$

b) $\Delta\varnothing 2$    $I02(t)$    $I12(t)$

$I(t)$   $t$

$q0$

$+$

42

$\Delta q(\beta) = q0 - q(\beta)$

44

26

10

20,22

$q(\beta) = \dfrac{d_1(\beta, \Delta h)}{d_2(\beta, \Delta h)}$

40

$d_1(\beta, \Delta h)$

$d_2(\beta, \Delta h)$

24

EP 0 858 931 B1